# FASCICULE DE BREVET EUROPEEN

(11) **EP 1 571 020 B1**
(45) Date de publication et mention de la délivrance du brevet: **01.08.2007**
(21) Numéro de dépôt: 05001260.8
(22) Date de dépôt: 21.01.2005
(51) Int. Cl.: B60H 1/00, G05G 5/03, G05G 1/08

(54) **Dispositif de commande, notamment pour une installation de ventilation, chauffage et ou climatisation, équipé d'une assistance à l'effort**
Steuerungsvorrichtung, insbesondere für eine Lüftungs-, Heizung- oder Klimaanlage, mit einer Krafthilfeeinrichtung
Control device, in particular for a ventilation, heating or air-conditioning system, provided with a force assisting device

(30) Priorité: 04.03.2004 FR 0402377
(43) Date de publication de la demande: 07.09.2005
(73) Titulaire: Valeo Systèmes Thermiques, 78321 Le Mesnil St Denis Cedex (FR)
(72) Inventeur: Lacroix, Louis, 94500 Champigny sur Marne (FR)

(56) Documents cités:
- FR-A- 2 803 054
- GB-A- 613 022
- GB-A- 1 204 115

## Description

### Domaine technique de l'invention.

Le secteur technique de la présente invention est celui des dispositifs de commande destinés au contrôle d'une installation de ventilation, chauffage et/ou climatisation d'un véhicule automobile. Cette invention a pour objet l'assistance à l'effort d'un élément de manoeuvre monté sur un dispositif de commande. Un élément selon le préambule de la revendication 1 est décrit dans le document GB 1204115.

### Etat de la technique.

Les dispositifs de commande d'une installation de ventilation, chauffage et/ou climatisation sont connus sous le terme « tableau de commande ». Ces dispositifs comprennent des commandes rotatives ou translatives dont l'objectif est d'agir sur des volets qui contrôlent le flux d'air à l'intérieur de l'installation de ventilation, chauffage et/ou climatisation du véhicule. Dans certaines applications, les volets doivent être maintenus dans des positions précises et éviter la localisation instable entre ces positions précises. Ceci peut être le cas, par exemple, pour le volet qui gère le flux d'air extérieur par rapport au flux d'air re-circulé ou pour le volet dit de distribution qui gère la répartition du flux d'air vers les différentes sorties de l'habitacle (pied, aération centrale, aération latérale, pare-brise).

Le maintien selon des positions précises pour un type de commande tout ou rien se fait habituellement par une bille qui vient coopérer avec un logement définissant ainsi les positions. Cependant, ce type de commande permet l'arrêt entre les deux positions précises, c'est-à-dire en milieu de course, ce qui n'est pas satisfaisant pour une commande du type tout ou rien.

Un autre inconvénient de ce type de commande réside dans le fait qu'elle est particulièrement difficile à manoeuvrer. En effet, les efforts sont souvent très importants pendant la course, et trop forts à l'approche d'une position précise pour assurer le blocage nécessaire au maintien en fermeture des volets.

Un autre inconvénient de l'état de la technique cité ci-dessus réside dans le fait qu'il n'interdit pas de manière satisfaisante l'irréversibilité de la manoeuvre. En effet, le volet est susceptible de commander l'élément de manoeuvre et ainsi faire tourner le bouton du tableau de commande sous l'effort imposé par le flux d'air sur le volet.

### Objet de l'invention.

Le but de la présente invention est donc de résoudre les inconvénients décrits ci-dessus principalement en proposant une organisation mécanique qui exerce un effort contraire ou complémentaire à la commande de l'élément de manoeuvre de manière, d'une part à maintenir fermement dans une position précise l'élément de manoeuvre et consécutivement le volet, d'autre part à empêcher le positionnement instable entre deux points précis qui correspondent à une commande tout ou rien.

L'invention a donc pour objet un dispositif de commande notamment pour une installation de ventilation, chauffage et/ou climatisation pour véhicule automobile comprenant un support et un élément de manoeuvre mobile en rotation, caractérisé en ce qu'il comprend au moins un élément flexible en contact avec au moins un ergot solidaire de l'élément de manoeuvre de tel sorte que l'élément flexible exerce un effort contraire à l'effort de commande de l'élément de manoeuvre pendant une première zone angulaire de rotation puis exerce un effort complémentaire à l'effort de commande de l'élément de manoeuvre pendant une seconde zone angulaire de rotation.

Selon une première caractéristique de l'invention, l'élément flexible est maintenu par le support par au moins un point de fixation.

Selon une deuxième caractéristique de l'invention, l'élément flexible s'étend selon un plan sensiblement perpendiculaire à l'axe de rotation de l'élément de manoeuvre.

Selon une autre caractéristique de l'invention, l'élément flexible est une lame de ressort.

Selon encore une caractéristique de l'invention, l'ergot comprend à son extrémité libre un moyen de glissement sur l'élément flexible.

Selon encore une autre caractéristique de l'invention, le moyen de glissement est une forme arrondie de l'extrémité de l'ergot.

Le moyen de glissement est une forme triangulaire de l'extrémité de l'ergot dont une arête est en contact avec l'élément flexible ou une roue en appui sur l'élément flexible dont l'axe de rotation est supporté par l'ergot.

Avantageusement, l'élément de manoeuvre comporte un levier destiné à transmettre l'effort de rotation de l'élément de manoeuvre à un câble.

Avantageusement encore, le levier est relié au câble par l'intermédiaire d'une tirette montée coulissante dans le support.

Ce levier comporte un plot qui coulisse dans une lumière pratiquée dans la tirette.

Par ailleurs, l'élément de manoeuvre est entraîné en rotation par un bouton de commande qui coopère avec le support.

Selon une caractéristique de l'invention, le support est intercalé entre l'élément de manoeuvre et le bouton de commande, ce dernier étant relié à l'élément de manoeuvre par au moins trois clips de fixation.

Enfin le bouton de commande présente une excroissance qui coopère avec un évidement pratiqué dans le support de sorte à limiter le mouvement de rotation de l'élément de manoeuvre.

Un tout premier avantage du dispositif selon l'invention réside dans le fait qu'il interdit le blocage entre les deux positions qui définissent l'ouverture et la fermeture d'un volet.

Un autre avantage réside dans la possibilité de fournir un effort complémentaire à l'effort de commande fourni par l'utilisateur pendant une zone angulaire déterminée ce qui augmente la qualité de l'impression générale ressentie par l'utilisateur.

Un autre avantage non négligeable réside dans le fait qu'il rend pratiquement impossible toute irréversibilité de la commande.

### Description des figures.

D'autres caractéristiques, détails et avantages de l'invention ressortiront plus clairement à la lecture de la description donnée ci-après à titre indicatif en relation avec des dessins dans lesquels :
- la figure 1 est une vue d'ensemble du dispositif de commande selon l'invention,
- la figure 2 est une vue éclatée du dispositif de commande selon l'invention,
- les figures 3 à 5 sont des vues arrière du dispositif de commande selon l'invention illustrant différentes positions de l'élément de manoeuvre,
- la figure 6 est une vue partielle d'une variante de l'ergot du dispositif de commande selon l'invention,
- la figure 7 est une vue partielle d'une autre variante de l'ergot du dispositif de commande selon l'invention.

Les dessins contiennent, pour l'essentiel, des éléments de caractère certain. Ils pourront donc non seulement servir à mieux faire comprendre la description, mais aussi contribuer à la définition de l'invention le cas échéant.

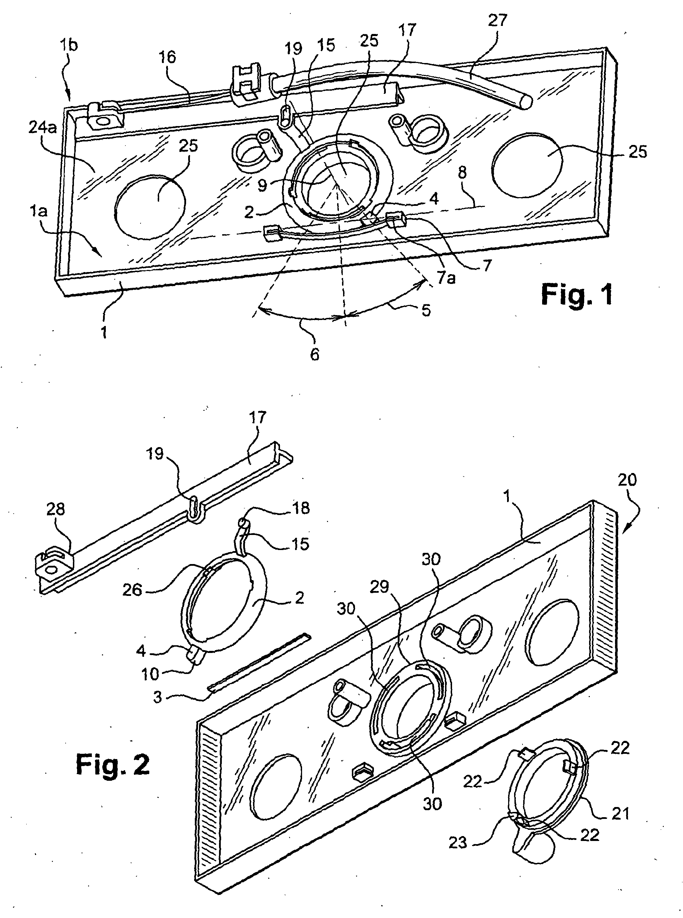

La figure 1 illustre un dispositif de commande pour une installation de ventilation, chauffage et/ou climatisation d'un véhicule. Ce dispositif comprend entre autre un support 1 qui se divise en une paroi principale 1a et une paroi périphérique 1b. La paroi principale 1a présente une face 24a non visible par l'utilisateur du dispositif de commande et une face 24b. Dans le cas où le support 1 a une fonction esthétique en plus de sa fonction technique, la face 24b devient la face visible par l'utilisateur et peut dans ce cas être recouverte d'un film, de cuir, de bois ou être sérigraphiée.

La paroi 1a présente au moins un trou 25 nécessaire au maintien d'un bouton de commande 21. Ce dernier est disposé sensiblement contre la face 24b et coopère avec un élément de manoeuvre 2 qui lui est installé sensiblement contre la face 24a. La liaison entre l'élément de manoeuvre 2 et le bouton de commande 21 est pratiquée au moyen de clips de fixation 22 qui coopèrent avec des logements 26 formés sur le pourtour intérieur de l'élément de manoeuvre 2. On comprend ainsi que le support 1 est intercalé ou pris en sandwich entre l'élément de manoeuvre 2 et le bouton de commande 21 et que ces derniers subissent un mouvement de rotation lorsqu'ils sont soumis à un effort par l'utilisateur du véhicule.

L'élément de manoeuvre 2 se présente sous une forme générale annulaire et comporte sur sa périphérie extérieure un ergot 4 et un levier 15. Ces trois pièces sont avantageusement moulées unitairement.

L'ergot 4 est en contact avec un élément flexible 3 maintenu par au moins un point de fixation 7. Bien entendu, le fonctionnement se trouvera facilité par la présence de deux points de fixation 7. Ces derniers sont solidaires de la face 24a du support 1 et proviennent du moulage du support 1. Ces points de fixation 7 se présentent sous une forme générale rectangulaire et comportent une fente 7a destinée à recevoir l'élément flexible 3. Ce dernier est donc d'une part glissé dans les fentes 7a et d'autre part en contact avec l'ergot 4 de l'élément de manoeuvre 2. L'élément flexible présente ici toutes les caractéristiques d'une lame de ressort, c'est-à-dire susceptible de reprendre sa position après avoir été soumise à un effort.

L'extrémité libre de l'ergot 4 comporte un moyen de glissement qui se présente ici sous une forme de réalisation arrondie.

L'élément flexible 3 est représenté à titre d'exemple sous la forme d'une lame de ressort qui exerce un effort sur l'ergot 4. Cet élément flexible 3 s'étend selon un plan 8 sensiblement perpendiculaire à l'axe de rotation de l'élément de manoeuvre 2 de sorte que le contact entre l'ergot 4 et l'élément flexible 3 soit continu pendant tout le déplacement du bouton de commande.

Le levier 15 de l'élément de manoeuvre 2 est relié à une tirette 17 par coopération de forme entre l'extrémité du levier 15 et une lumière 19 qui s'étend sensiblement perpendiculairement à l'axe supportant la grande longueur de la tirette 17. Cette dernière est montée coulissante dans le support 1 et est reliée par une de ses extrémités à un câble 16 qui coulisse dans une gaine 27.

La figure 2 est une vue éclatée du dispositif selon l'invention. Le levier 15 de l'élément de manoeuvre 2 comprend à son extrémité un plot 18 sous la forme d'un rondin sorti de moulage dont le but est de translater ou coulisser dans la lumière 19.

La liaison entre le câble 16 et la tirette 17 est assurée au moyen d'une attache 28 destinée à recevoir l'embout de câble.

Le trou 25 comporte un renfort 29 dans lequel sont pratiquées des lumières 30 de forme semi cylindrique. Ces lumières 30 sont traversées par les clips de fixation 22 du bouton de commande 21.

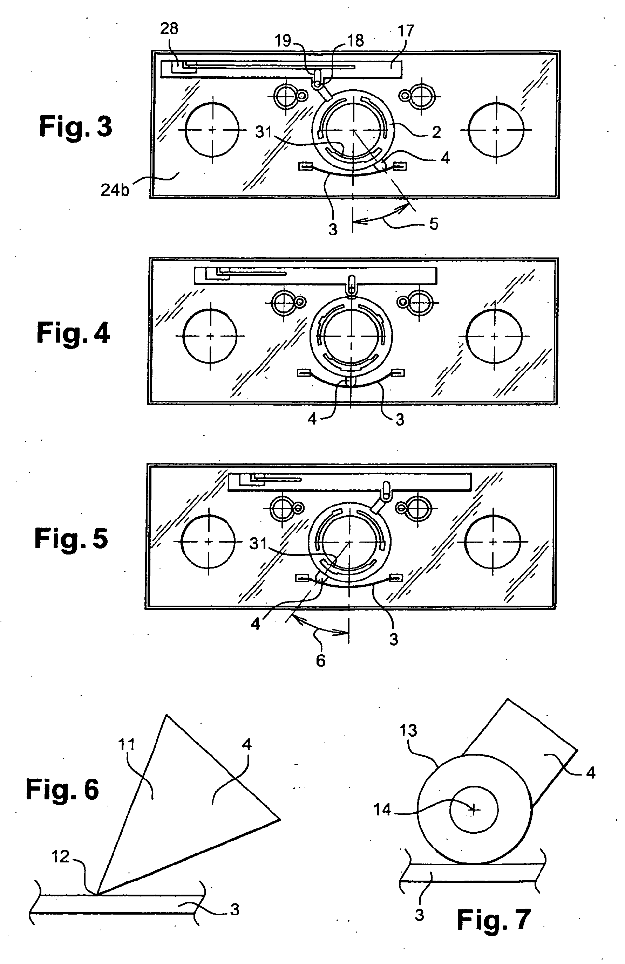

Les figures 3 à 5 illustrent le dispositif de commande dans trois positions.

Dans la figure 3, l'élément de manoeuvre 2 est dans une première position qui correspond à une première zone angulaire 5. Cette figure montre en outre qu'au moins une des lumières 30 comporte un évidement supplémentaire 31 qui coopère plus particulièrement avec une excroissance 23 solidaire du bouton de commande 21. En effet, les extrémités de cet évidement 31 coopèrent avec l'excroissance 23 et servent ainsi de butée au déplacement du bouton de commande 21 et donc de toute la chaîne cinématique jusqu'à l'attache 28.

Dans cette première position, l'élément flexible 3 exerce un effort sur l'ergot 4 et maintient donc le bouton de commande 21 et consécutivement l'élément de manoeuvre 2 contre une butée de l'évidement 31.

Quand l'utilisateur souhaite actionner le dispositif de commande, il exerce un effort sur le bouton de commande 2 de sorte à le faire tourner autour d'un axe de rotation 9 alors que l'élément flexible 3 exerce un effort contraire. Cet effort est considéré comme contraire à l'effort de l'utilisateur tant que le déplacement de l'ergot 4 se fait dans la première zone angulaire 5. Le plot 18 coulisse dans la lumière 19 et commande ainsi la translation de la tirette 17.

La figure 4 montre le dispositif dans une position dite instable où l'élément flexible 3 exerce un effort maximum sur l'ergot 4. Le bouton de commande est alors en position intermédiaire sensiblement au milieu de sa course. Cette position n'est pas une position normale de fonctionnement et le blocage possible dans cette position instable est contrecarré par la forme arrondie de l'extrémité de l'ergot 4 de manière à éviter un arrêt intempestif du dispositif de commande dans cette position instable. D'autres variantes sont possibles et seront détaillées à la description en rapport avec les figures 6 et 7.

La figure 5 illustre le dispositif de commande selon l'invention dans une.seconde position qui correspond à une deuxième butée pratiquée à l'autre extrémité de l'évidement 31. Entre la position instable illustrée à la figure 4 et la seconde position montrée à la figure 5, l'ergot parcourt une trajectoire sensiblement circulaire sous l'effet d'une combinaison de l'effort exercé par l'utilisateur du véhicule et d'un effort exercé par l'élément flexible 3, cette trajectoire correspondant à une seconde zone angulaire 6 de rotation.

Les deux efforts sont donc complémentaires de sorte que l'effort exercé par l'utilisateur s'efface devant l'effort de l'élément flexible 3 avec pour conséquence d'une part d'éviter des efforts supplémentaires désagréables pour l'utilisateur et d'autre part d'offrir une sensibilité de manoeuvre satisfaisante.

Il est à noter que le processus s'inverse quand l'utilisateur souhaite revenir de la seconde position vers la première position. En effet, c'est sur le parcours de la seconde zone angulaire 6 que l'élément flexible 3 exerce un effort contraire à l'effort de commande de l'élément de manoeuvre et sur le parcours de la première zone angulaire 5 que l'élément flexible 3 exerce un effort complémentaire à l'effort de commande de l'élément de manoeuvre 2 soumis à l'action de l'utilisateur.

La figure 6 met en valeur une variante de réalisation de l'ergot 4 dans laquelle son extrémité libre comporte un moyen de glissement qui se présente sous une forme sensiblement triangulaire. Cette forme comporte une arête 12 avantageusement vive de manière à réduire au maximum les frottements entre l'ergot 4 et l'élément flexible 3. Cette variante de réalisation de l'extrémité de l'ergot 4 évite le blocage involontaire de dispositif de manoeuvre 2 dans une position non désirée telle que la position instable représentée à la figure 4.

La figure 7 représente une autre variante de réalisation de l'ergot 4. Ce dernier comporte à son extrémité libre un moyen de glissement qui se compose d'une roue 13 dont l'axe de rotation 14 est supporté par l'ergot 4. La partie périphérique extérieure de cette roue 13 est en appui sur l'élément flexible 3 et roule sur ce dernier au cours de la rotation de l'élément de manoeuvre 2 dans les première et seconde zones angulaires 5 et 6.

Cette variante de réalisation diminue fortement les risques d'arrêt intempestif dans la position instable car le contact entre l'ergot 4 et l'élément flexible 3 ne se fait plus par frottement mais plutôt par roulage d'une pièce sur l'autre. Ainsi, le mouvement de rotation de l'élément de manoeuvre 2 est fluide et ininterrompu augmentant ainsi la sensibilité et le rendu dynamique pour l'utilisateur.

## Revendications

1. Dispositif de commande notamment pour une installation de ventilation, chauffage et/ou climatisation pour véhicule automobile comprenant un support (1) et un élément de manoeuvre (2) mobile en rotation, au moins un élément flexible (3) en contact avec au moins un ergot (4) solidaire de l'élément de manoeuvre (2), **caractérisé en ce que** l'élément flexible (3) exerce un effort contraire à l'effort de commande de l'élément de manoeuvre (2) pendant une première zone angulaire (5) de rotation puis exerce un effort complémentaire à l'effort de commande de l'élément de manoeuvre (2) pendant une seconde zone angulaire (6) de rotation.

2. Dispositif de commande selon la revendication 1, **caractérisé en ce que** l'élément flexible (3) est maintenu par le support (1) par au moins un point de fixation (7).

3. Dispositif selon l'une des revendications 1 ou 2, **caractérisé en ce que** l'élément flexible (3) s'étend selon un plan (8) sensiblement perpendiculaire à l'axe de rotation (9) de l'élément de manoeuvre (2).

4. Dispositif selon l'une quelconque des revendications 1 à 3, **caractérisé en ce que** l'élément flexible (3) est une lame de ressort.

5. Dispositif selon l'une quelconque des revendications 1 à 4, **caractérisé en ce que** l'ergot (4) comprend à son extrémité libre un moyen de glissement sur l'élément flexible (3).

6. Dispositif selon la revendication 5, **caractérisé en ce que** le moyen de glissement est une forme arrondie (10) de l'extrémité de l'ergot (4).

7. Dispositif selon la revendication 5, **caractérisé en ce que** le moyen de glissement est une forme triangulaire (11) de l'extrémité de l'ergot (4) dont une arête (12) est en contact avec l'élément flexible (3).

8. Dispositif selon la revendication 5, **caractérisé en ce que** le moyen de glissement est une roue (13) en appui sur l'élément flexible (3) dont l'axe de rotation est supporté par l'ergot (4).

9. Dispositif selon l'une quelconque des revendications précédentes, **caractérisé en ce que** l'élément de manoeuvre (2) comporte un levier (15) destiné à transmettre l'effort de rotation de l'élément de manoeuvre (2) à un câble (16).

10. Dispositif selon la revendication 9, **caractérisé en ce que** le levier (15) est relié au câble (16) par l'intermédiaire d'une tirette (17) montée coulissante dans le support (1).

11. Dispositif selon la revendication 10, **caractérisé en ce que** le levier (15) comporte un plot (18) qui coulisse dans une lumière (19) pratiquée dans la tirette (17).

12. Dispositif selon l'une quelconque des revendications précédentes, **caractérisé en ce que** l'élément de manoeuvre (2) est entraîné en rotation par un bouton de commande (21) qui coopère avec le support (1).

13. Dispositif selon la revendication 12, **caractérisé en ce que** le support (1) est intercalé entre l'élément de manoeuvre (2) et le bouton de commande (21), ce dernier étant relié à l'élément de manoeuvre (2) par au moins trois clips de fixation (22).

14. Dispositif selon l'une quelconque des revendications 12 ou 13, **caractérisé en ce que** le bouton de commande (21) présente une excroissance (23) qui coopère avec un évidement (31) pratiqué dans le support (1) de sorte à limiter le mouvement de rotation de l'élément de manoeuvre (2).

## Claims

1. Control device which is mainly used in the installation of ventilation, heating and/or air conditioning for vehicles having a support (1) and an operating device (2) which is mobile in rotation, at least a flexible element (3) in contact with at least a lug (4) connected to the operating device (2), **characterised in that** the flexible element (3) exerts an effort opposite to the effort of control of the operating device (2) during a first angular zone (5) of rotation then exerts a complimentary effort to the effort of control of the operating device (2) during a second angular zone (6) of rotation.

2. Control device according to claim 1, **characterised in that** the flexible element (3) is held by the support (1) by at least one point of fixation (7).

3. Device according to claim 1 or 2, **characterised in that** the flexible element (3) extends according to a plan (8) substantially perpendicular to the rotation axis (9) of the operating device (2).

4. Device according to any of claims 1 to 3, **characterised in that** the flexible element (3) is a spring blade.

5. Device according to any of claims 1 to 4, **characterised in that** the lug (4) has at its free end a means of sliding on the flexible element (3).

6. Device according to claim 5 **characterised in that** the means of sliding is a round form (10) of the extremity of the lug (4).

7. Device according to claim 5 **characterised in that** the means of sliding is a triangular form (11) of the extremity of the lug (4) of which an edge (12) is in contact with the flexible element (3).

8. Device according to claim 5, **characterised in that** the means of sliding is a wheel (13) which abuts the flexible element (3) whose rotation axis is supported by the lug (4).

9. Device according to any of the previous claims, **characterised in that** the operating device (2) is comprised of a lever (15) destined to transmit the effort of rotation of the operating device (2) to a cable (16).

10. Device according to claim 9, **characterised in that** the lever (15) is connected to the cable (16) by means of a draw bar (17) assembled sliding in the support (1).

11. Device according to claim 10, **characterised in that** the lever (15) is comprised of an electrical contact rivet (18), which slides in a light (19) practised in the draw bar (17).

12. Device according to any of the previous claims **characterised in that** the operating device (2) is carried into rotation by a control knob (21), which cooperates with the support (1).

13. Device according to claim 12, **characterised in that** the support (1) is inserted between the operating device (2) and the control knob (21), the latter being connected to the operating device (2) by at least three fixing clips (22).

14. Device according to any of claims 12 or 13, **characterised in that** the control knob (21) presents an outgrowth (23) which cooperates with a recess (31) practised in the support (1) so as to restrict the rotation movement of the operating device (2).

## Patentansprüche

1. Steuereinrichtung insbesondere für eine Belüftungs-, Heizungs- und/oder Klimaanlage für Kraftfahrzeuge umfassend einen Halter (1) und ein Betätigungselement (2), das drehbeweglich ist, zumindest ein flexibles Element (3), das in Kontakt mit zumindest einem Stift (4) ist, der fest mit dem Betätigungselement (2) verbunden ist, **dadurch gekennzeichnet, dass** das flexible Element (3) eine Kraft, die der Steuerkraft des Betätigungselementes (2) entgegengesetzt ist, über einen ersten Drehwinkelbereich (5) ausübt, und danach eine Kraft, die komplementär zur Steuerkraft des Betätigungselementes (2) ist, über einen zweiten Drehwinkelbereich (6) ausübt.

2. Steuereinrichtung nach Anspruch 1, **dadurch gekennzeichnet, dass** das flexible Element (3) durch den Halter (1) durch zumindest einen Befestigungspunkt (7) gehalten wird.

3. Einrichtung nach einem der Ansprüche 1 oder 2, **dadurch gekennzeichnet, dass** sich das flexible Element (3) nach einer Ebene (8) erstreckt, die im Wesentlichen senkrecht zur Drehachse (9) des Betätigungselementes (2) ist.

4. Einrichtung nach einem der Ansprüche 1 bis 3, **dadurch gekennzeichnet, dass** das flexible Element (3) ein Federblatt ist.

5. Einrichtung nach einem der Ansprüche 1 bis 4, **dadurch gekennzeichnet, dass** der Stift (4) an seinem freien Ende ein Gleitmittel über das flexible Element (3) umfasst.

6. Einrichtung nach Anspruch 5, **dadurch gekennzeichnet, dass** das Gleitmittel eine abgerundete Form (10) des Endes vom Stift (4) ist.

7. Einrichtung nach Anspruch 5, **dadurch gekennzeichnet, dass** das Gleitmittel eine dreieckige Form (11) des Endes vom Stift (4) ist, von dem ein Rand (12) im Kontakt mit dem flexiblen Element (3) ist.

8. Einrichtung nach Anspruch 5, **dadurch gekennzeichnet, dass** das Gleitmittel ein Rad (13) ist, das sich auf das flexible Element (3) stützt, von dem die Drehachse vom Stift (4) getragen wird.

9. Einrichtung nach einem der vorhergehenden Ansprüche, **dadurch gekennzeichnet, dass** das Betätigungselement (2) einen Hebel (15) umfasst, der dazu vorgesehen ist, die Drehkraft des Betätigungselementes (2) an ein Kabel (16) zu übertragen.

10. Einrichtung nach Anspruch 9, **dadurch gekennzeichnet, dass** der Hebel (15) mit dem Kabel (16) über einen Zug (17) verbunden ist, der gleitend im Halter (1) montiert ist.

11. Einrichtung nach Anspruch 10, **dadurch gekennzeichnet, dass** der Hebel (15) ein Kontaktstück (18) umfasst, das in einer Öffnung (19), die im Zug (17) vorgenommen ist, gleitet.

12. Einrichtung nach einem der vorhergehenden Ansprüche, **dadurch gekennzeichnet, dass** das Betätigungselement (2) durch einen Betätigungsknopf (21), der mit dem Halter (1) zusammenwirkt, in Drehung versetzt wird.

13. Einrichtung nach Anspruch 12, **dadurch gekennzeichnet, dass** der Halter (1) zwischen dem Betätigungselement (2) und dem Betätigungsknopf (21) eingefügt ist, wobei der Letztgenannte durch zumindest drei Befestigungsclips (22) mit dem Betätigungselement (2) verbunden ist.

14. Einrichtung nach einem der Ansprüche 12 oder 13, **dadurch gekennzeichnet, dass** der Betätigungsknopf (21) einen Wulst (23) aufweist, der derart mit einer Aussparung (31), die im Halter (1) vorgenommen ist, zusammenwirkt, dass die Drehbewegung des Betätigungselementes (2) begrenzt wird.
